# EUROPEAN PATENT SPECIFICATION

(11) **EP 3 828 144 B1**
(45) Date of publication and mention of the grant of the patent: **07.06.2023**
(21) Application number: 20208275.6
(22) Date of filing: 18.11.2020
(51) Int. Cl.: C02F 1/463, C02F 1/465, C02F 1/461

(54) **REACTOR FOR THE TREATMENT OF WASTEWATER**
REAKTOR ZUR BEHANDLUNG VON ABWASSER
RÉACTEUR POUR LE TRAITEMENT DES EAUX USÉES

(30) Priority: 27.11.2019 NL 2024321
(43) Date of publication of application: 02.06.2021
(73) Proprietor: Morselt Watertechniek B.V., 7622 AC Borne (NL)
(72) Inventor: GERNER, Christian, 45768 Marl (DE)
(74) Representative: Patentwerk B.V.

(56) References cited:
- WO-A1-2008/010418
- CN-U- 204 897 495
- JP-A- 2012 179 566
- KR-A- 20180 091 977
- KR-B1- 101 232 260
- US-A- 5 323 118

## Description

The invention relates to a reactor for the treatment of wastewater that contains contaminants, for example heavy metals, chemicals, oils, colourants, pigments, textile dyes, inks, bacteria, viruses, by electrolytic means, which reactor comprises: a wastewater reservoir, at least the inside of which is electrically insulating; an inlet for wastewater to be treated; an outlet for treated wastewater; wherein the wastewater is located in the reservoir for a chosen residence time during operation of the reactor; a number of alternately intermeshed mutually parallel vertical metal plates positioned with the same mutual distances between them acting as electrodes with connecting means for the connecting of the plates to a central unit of electric current, such that the plates are alternately connected with one connection and with the other connection of the central unit, such that, during operation of the reactor, an electric current flows between the plates through the wastewater present in the reservoir, whereby, as a result of electrolysis, a portion of the metal (M) of the plates is ionized and goes into solution in the form of metal ions (Mⁿ⁺, where n is the valency of the metal), hydroxyl ions (OH⁻) go into solution, and gas bubbles (inter alia H₂) appear on the surface of the plates, which gas bubbles rise in the water, altogether such that the contaminants bind to the metal ions, the hydroxyl ions and/or the gas bubbles, whereby clusters form through coagulation, some of which clusters undergo electroflotation and move upwards, whereby they form floating flocs on the water's surface, and others form sediment through precipitation which sinks to the bottom of the reservoir; adjusting means for the adjusting of the mutual distances between the adjacent plates, and hence the adjusting of the intensity of the current flowing through the plate electrodes via the water; and removal means for the removing of floating flocs and of the settled precipitate, or at least the facilitating thereof.

Such a reactor is known from DE-A-100 35 535. A method and a device for the treatment of wastewater by electrolytic means is known from this publication, in which the wastewater undergoes a pre-cleaning through electroflotation and by using electrodes made of metal, which release metal ions into the water to be cleaned through anodic dissolution. According to this publication, the floating particles are freed of gas bubbles bound thereto and forcibly suspended in the pretreated wastewater by shear forces, where, by the setting of a basic pH value, i.e. of more than 7, the metal ions that have gone into solution during electroflotation are mainly completely transformed into insoluble, or at least very sparingly soluble, hydroxide, and the flocs thus formed are subsequently separated. The publication mentions the possibility that the mutual distances between the adjacent electrode plates may be varied in accordance with the conductivity of the wastewater. In this way, the electric current intensity and thus the amount of the electrode material that goes into solution, or the amount of hydrogen given off, respectively, can automatically be kept constant. The publication does not mention the way in which the mutual distance between the electrode plates can be adjusted such that a determined conductivity can be set between the electrode plates via the liquid.

It is an object of the invention to configure the device known from DE-A-100 35 535 such that the mutual distances between adjacent plates may be varied over a wide range in a very straightforward and reliable manner.

Also, such a device is known from KR 101 232 260 B1. Relative to this publication the purpose of the invention is to regulate the inter-electrode distance in an alternative and easy and reliable way.

With regard to this object, the invention provides a reactor of the type mentioned in the introduction, which, according to the invention, exhibits the feature that the plates are commonly arranged by means of hinges so as to be pivotable about individual, mutually parallel pivot axes that are determined by the hinges and extend in one flat plane and the plates are pivotable about the axes through the action of the pivot means while maintaining their mutually parallel relationship, such that the mutual distance between adjacent plates can be adjusted under the effect of a central unit between a maximum distance, where the plates extend perpendicular to the flat plane determined by the pivot axes, and a minimum distance determined by spacing means.

To avoid imbalance, the reactor may exhibit the particular feature that the pivot axes extend through the mid regions of the plates.

Preferably, the reactor is designed such that the pivot axes extend vertically.

The reactor according to the invention may exhibit the particular feature that a stepper motor, forming part of the pivot means, is added to each plate, which stepper motors are controlled such that all plates always assume the same pivot positions. This embodiment is straightforward and reliable, but may possibly have the drawback that stepper motors are less suitable for use in a chemically aggressive medium which is inherent to the treatment of wastewater by electrolytic means.

Consequently, preference is given to an embodiment in which the reactor exhibits the particular feature that the pivot means comprise a common linear actuator, which is advantageously coupled with all plates via a straight coupling rod, parallel to the flat plane determined by the hinge axes in a force-transmitting and hingeable, electrically insulating manner via a pivot arm that extends between the output shaft of the actuator and the coupling rod parallel thereto.

The electrically insulating character of the coupling between the coupling rod and the plates may be achieved in a straightforward manner with an embodiment in which the coupling rod is made from a mechanically sufficiently strong electrically insulating plastic, such as HDPE or PP. These materials are also suitable for the wastewater reservoir.

It should further be understood that the coupling rod is located at a determined distance from the pivot axes, which distance is dependent on the instantaneous pivot angle, i.e. the position of the electrode plates. The linear actuator is arranged fixedly with respect to the wall of the reactor and therefore a transmission is needed to connect the output shaft of the actuator with the coupling rod in a force-transmitting manner. This purpose is served by the pivot arm, which is connected, on the one hand, hingedly with the output shaft of the actuator and, on the other hand, hingeably with the input side of the coupling rod. In this way, both the pivoting movement and the variable distance between the coupling rod and the flat plane determined by the pivot axes are ensured.

In one preferred embodiment, the reactor exhibits the particular feature that the pivot means are controllable by a central unit. This central unit also comprises electrical supply means for the adjusting of the electric current flowing through the liquid between the plates.

The central unit may thus also be provided with measurement means for the measuring of the intensity of the electric current flowing through the water via the plates and for the adjusting of the pivot means, and thereby the mutual distance between the plates, on the basis of the chosen nominal current intensity entered into the measurement means such that the measured current intensity is automatically adjusted to the nominal current intensity.

The electric current will partly be chosen on the basis of the degree of contamination of the wastewater to be treated. The degree of contamination of the wastewater will also be taken into consideration for choosing the desired residence time of the water in the reactor.

Advantageously, the reactor may exhibit the feature that the central unit delivers direct current and all anode plates consist of aluminium or iron and all cathode plates consist of iron or aluminium, respectively. With the use of an alternating current, the electrodes repeatedly switch polarity, whereby the function of anode and that of cathode switch in a periodic manner, for example every 20 ms at 50 Hz. This is at the expense of the desired complete controllability of the electrolytic process, of which the device according to the invention is capable. Optimal results are therefore achieved with an embodiment in which the central unit delivers direct current and all anode plates consist of aluminium and all cathode plates consist of a metal that is inert for the present electrolytic process, such as iron.

In one practical embodiment, the reactor exhibits the particular feature that the pivot means are configured such that the distances between adjacent plates are adjustable between about 2 mm and 20 mm.

From the values given here, it is apparent that the effective control range is of the order of 1 - 10. In this case, it should be taken into consideration that in the position of the non-maximum distances, the plates are positioned such that they do not completely overlap one another, but that a strip remains free at their edges. The difference with a complete overlap is however not more than a few percent, and therefore negligible from the point of view of process efficiency.

In one preferred embodiment, the reactor exhibits the particular feature that the maximum distance between adjacent plates corresponds to a pivot position of the plates wherein all plates extend at an angle of 90° with respect to the plane determined by the pivot axes, and the minimum distance between adjacent plates corresponds to a pivot position of the plates wherein adjacent plates are kept out of electrically conductive contact with one another by spacing means.

In one practical embodiment of such a reactor, the reactor exhibits the particular feature that the pivot position of the plates corresponding to the minimum distance is in the range of 60 - 75° with respect to the pivot position corresponding to the maximum distance.

It will be clear without explanation that the plates should never come into electrically conductive contact with one another in order to prevent a short circuit. One straightforward and inexpensive embodiment is that in which the spacing means present to that end are electrically insulating mechanical means, for example a stop made of a suitable electrically insulating plastic.

As an alternative, it is possible to use a variant in which the spacing means are implemented in software in the central unit.

In one practical embodiment, the reactor may exhibit the particular feature that the plates have a thickness in the range of 7 - 25 mm.

The reactor could be used intermittently, for example it could be repeatedly successively filled with wastewater to be treated and, after electrolytic cleaning for a certain residence time, emptied from the reservoir.

According to the invention, preference is given to an embodiment in which the reactor is designed as a flow-through system and the residence time of the water in the reservoir is determined by timing means, into which the nominal value of the water flow rate through the reservoir can be entered, where the residence time is equal to the quotient of the effective volume of the reservoir and the water flow rate. The invention will now be explained with the aid of the appended drawings. These show:
Figure 1, a top view of one exemplary embodiment of a reactor according to the invention, in which the mutual distance between the electrode plates is minimal;
Figure 2, the top view according to Figure 1 in the situation in which the distance between the electrode plates is maximal;
Figure 3, a cut-away perspective view of the reactor according to Figures 1 and 2; and
Figure 4, a functional diagram, partially in block-diagram form, of the reactor according to the invention.

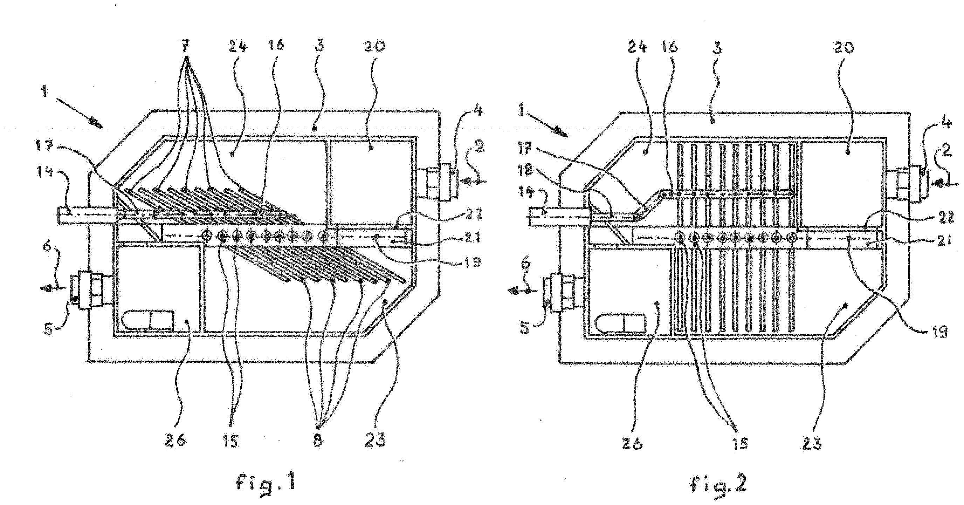

Figures 1 and 2 show top views of a reactor 1 with a wastewater reservoir 3 made of PP or HDPE for the treatment of wastewater 2 that contains contaminants, for example heavy metals, chemicals, oils, colourants, pigments, textile dyes, inks, bacteria, viruses, by electrolytic means, which reactor 1 comprises: the wastewater reservoir 3; an inlet 4 for wastewater 2 to be treated; an outlet 5 for treated wastewater 6; wherein the wastewater is located in the reservoir 3 for a chosen residence time during operation of the reactor 1; a number of alternately intermeshed mutually parallel metal plates 7; 8 positioned with the same mutual distances between them acting as electrodes with connecting means 9; 10 for the connecting of the plates 7; 8 to a source of electric current, such that the plates 7; 6 are alternately connected with one connection and with the other connection 12; 13 of a central unit 11, such that, during operation of the reactor 1, an electric current flows between the plates 7; 8 through the wastewater 2 present in the reservoir 3, whereby, as a result of electrolysis, a portion of the metal M of the plates 7; 8 is ionized and goes into solution in the form of metal ions (Mⁿ⁺, where n is the valency of the metal), hydroxyl ions (OH⁻) go into solution, and gas bubbles (inter alia H₂) appear on the surface of the plates 7; 8, which gas bubbles rise in the water 2, altogether such that the contaminants bind to the metal ions, the hydroxyl ions and/or the gas bubbles, whereby clusters form through coagulation, some of which clusters undergo electroflotation and move upwards, whereby they form floating flocs on the water's surface, and others form sediment through precipitation which sinks to the bottom of the reservoir 3; adjusting means for the adjusting of the mutual distances between the adjacent plates 7; 8, and hence the adjusting of the intensity of the current flowing through the plate 7, 8 electrodes via the water 2; and removal means for the removing of floating flocs and of the settled precipitate, or at least the facilitating thereof.

Such removal means may be based on suction. As an alternative, the floating flocs may, for example, be skimmed off the water's surface by hand with a certain degree of regularity.

The plates 7, 8 are commonly arranged by means of hinges 19 so as to be pivotable about individual, mutually parallel vertical pivot axes 15 that are determined by the hinges and extend in one flat plane and the plates 7, 8 are pivotable about the axes through the action of the pivot means 14, 15, 16, 17, 18, 19 while maintaining their mutually parallel relationship, such that the mutual distance between adjacent plates 7, 8 can be adjusted under the effect of a central unit 11 between a maximum distance, where the plates 7, 8 extend perpendicular to the flat plane 19 determined by the pivot axes 15, as illustrated in Figure 2, and a minimum distance, as illustrated in Figure 1.

The pivot axes extend through the mid region of the plates 7, 8. This prevents imbalance.

The pivot means 14, 15, 16, 17, 18, 19 comprise a common linear actuator 14.

In this embodiment, this actuator is coupled with all plates 7, 8 via a straight coupling rod 16, parallel to the flat plane 19 determined by the hinge axes 15 in a force-transmitting and hingeable, electrically insulating manner via a pivot arm 17 that extends between the output shaft 18 of the actuator and the coupling rod 16 parallel thereto.

The actuator 14 of the pivot means 14, 15, 16, 17, 18, 19 is controllable by a central unit 11.

A central unit 11 comprises measurement means for the measuring of the intensity of the electric current flowing through the water 2 via the plates 7, 8 and for the adjusting of the pivot means 14, 15, 16, 17, 18, 19, and thereby the mutual distance between the plates 7, 8, on the basis of the chosen nominal current intensity entered into the measurement means such that the measured current intensity is automatically adjusted to the entered nominal current intensity.

In this embodiment, the central unit 11 delivers direct current and, in this embodiment, all anode plates 7 consist of aluminium and all cathode plates 8 consist of a metal that is inert for the present electrolytic process, such as iron. It should be noted that it is also possible for the cathode plates 8 to consist of aluminium and the anode plates 7 of iron.

The pivot means 14, 15, 16, 17, 18, 19 are configured such that the distances between adjacent plates 7, 8 are adjustable between about 2 mm and 20 mm.

The maximum distance between adjacent plates 7, 8 corresponds to a pivot position of the plates 7, 8 in which all plates 7, 8 extend at an angle of 90° to the plane determined by the pivot axes 15, and the smallest distance between adjacent plates 7, 8 corresponds to a pivot position of the plates 7, 8 in which adjacent plates 7, 8 are kept out of electrically conductive contact with one another by spacing means.

The pivot position of the plates 7, 8 corresponding to the minimum distance is in the range of 60° - 75° with respect to the pivot position corresponding to the maximum distance.

The spacing means are electrically insulating mechanical means, for example a stop made of electrically insulating plastic.

The plates 7, 8 have a thickness in the range of 7 - 25 mm.

The reactor is designed as a flow-through system and the residence time of the water in the reservoir 3 is determined by timing means, into which the nominal value of the water flow rate through the reservoir 3 can be entered, where the residence time is equal to the quotient of the effective volume of the reservoir 3 and the water flow rate.

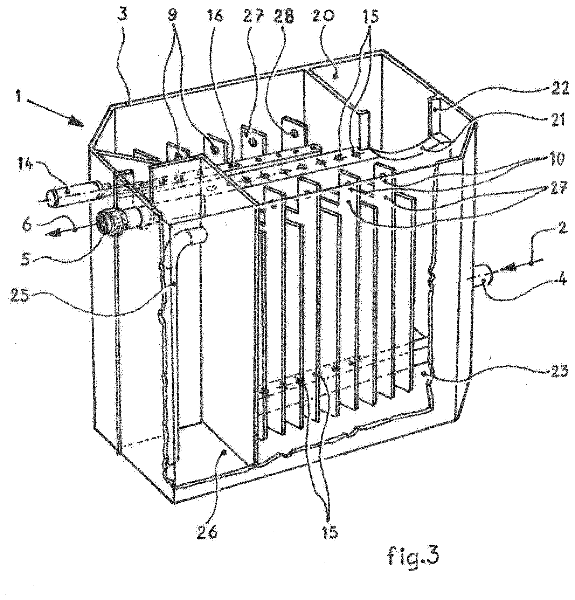

Figure 3 shows that, in this embodiment, the inlet 4 for wastewater 2 to be treated connects to the bottom of the reactor 1. The outlet 5 for treated wastewater 6 connects to the top of the reactor 1.

As clearly shown by Figures 1 and 2 in particular, the horizontal cross section through the reservoir 3 is not rectangular, but the reservoir 3 exhibits a shape such that the pivoting movement of the plates 7, 8 can take place such that the majority of the volume of the reservoir is used. To that end, the reservoir 3, and thus also the reactor 1, exhibits an oblique side 20, 21, respectively, on two corners located diagonally opposite one another. It is clear from Figures 1 and 2 that this makes the best possible use of the space inside the reservoir 3. Both in the position shown in Figure 1, in which the plates 7 exhibit the minimum mutual distance, and in the position shown in Figure 2, in which the distance between adjacent plates is at its greatest, there is a certain clearance between the side edges of the plates 7, 8 and the inside surface of the reservoir.

In the position shown in Figure 1, the output shaft 18, which is visible in Figure 2, of the actuator 14 is completely retracted, resulting in the pivot arm 17 having drawn the coupling rod 16 completely to the left into the position shown in Figure 1, in which the plates 7, 8 have a minimal mutual distance.

From the position shown in Figure 1, by being driven by the actuator, the output shaft 18 can, with some force, be moved to the right, whereby it exerts a pushing force on the pivot arm 17 which in turn exerts a pushing force on the coupling rod 16, which, under all circumstances, is forced to extend parallel to the flat plane 19 determined by the hinge axes 15. Thus, the pivot means are configured such that, by being driven by the actuator in one direction or the other, the pivot angle of the plates 7, 8 may be decreased or increased, which is accompanied by a corresponding change in the mutual distance between adjacent plates 7, 8.

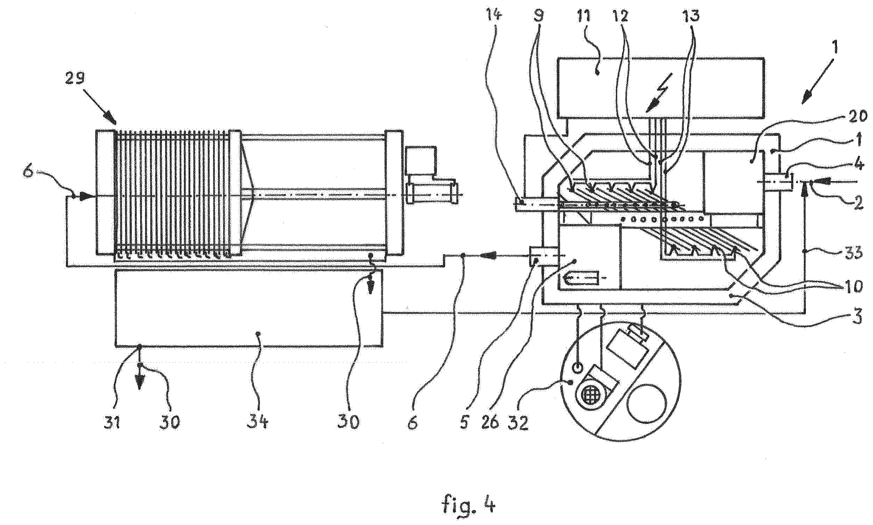

The inlet 4 does not lead into the wastewater reservoir 3, but into an inlet chamber 20, which only allows the wastewater 2 to be cleaned to flow into the reservoir 3 after a substantial filling with this water via a lowering, serving as an overflow, in a separating partition 22 between a first portion 23 of the reservoir 3 and the second portion 24 of the reservoir 3, in which the plates 7, 8 are located, which are coupled with this partition 22 with the pivot axes 15 so as to be pivotable about the hinge axes. An overflow pipe 25, leading from the top of the reservoir 3, connects to the reservoir on the other side, through which overflow water 6 is taken into a outlet chamber 26, which is gradually filled with cleaned wastewater via the overflow pipe 25 until this water has reached a level high enough that it can be drained away via the outlet 4, from whence it can be undergo aftertreatment in order to be reused or discharged in the manner show in Figure 4.

The plates 6, 7 all exhibit, at their top, a protruding portion with a through-hole. These protruding plate portions are all denoted by the reference number 27, while the through-holes present therein are denoted by the reference number 28. These through-holes 28 serve for the passage of bolts (not shown) for the coupling of cable lugs with the plate portions 27, which are in turn connected to power connection cables for the passing of electric current through the respective plates 7, 8 and thereby through the wastewater to be cleaned in the reservoir.

Figure 4 shows the reactor 1 as it may be incorporated into an installation for the cleaning of wastewater. A fabric filter press 34 is connected to the outlet 5 for treated wastewater 6 for the removing of clustered contaminants and for the supplying of cleaned water 30 to a buffer reservoir 29, which water, after this processing, complies with the regulatory requirements stipulated for the discharging of water into the sewer. From this buffer reservoir 24, the cleaned water 30 may be discharged into the sewer via an outlet 31.

A salt-dosing installation 32 is added to the reactor 1. This is configured to measure the conductivity of the water in the reservoir 3 and, in the case that the conductivity is too low and thus the cleaning capability of the reactor is too low, to add a salt to the water 2 in the reservoir 3, resulting in the conductivity of the water being increased and thus the cleaning capability of the reactor being improved.

In the case of very heavily contaminated wastewater 2 to be treated, it is conceivable that even the water 6 cleaned electrolytically and by the fabric filter press 29 still exhibits an overly high degree of contamination. In this case, treated and cleaned water may be returned to the inlet 4 of the reactor 1 via a return pipe 33 and there be mixed with the wastewater 2 to be treated, whereby a feedback loop is created which ensures that the water 30 ultimately to be discharged from the buffer reservoir 29 complies with the regulatory requirements.

## Claims

1. Reactor (1) for the treatment of wastewater (2) that contains contaminants, for example heavy metals, chemicals, oils, colourants, pigments, textile dyes, inks, bacteria, viruses, by electrolytic means, which reactor (1) comprises:
a wastewater reservoir (3), at least the inside of which is electrically insulating;
an inlet (4) for wastewater (2) to be treated;
an outlet (5) for treated wastewater (6);
wherein the wastewater is located in the reservoir (3) for a chosen residence time during operation of the reactor;
a number of alternately intermeshed mutually parallel vertical metal plates (7; 8) positioned with the same mutual distances between them acting as electrodes with connecting means (9; 10) for the connecting of the plates (7; 8) to a source of electric current, such that the plates (7; 6) are alternately connected with one connection and with the other connection (12; 13) of a central unit (11), such that, during operation of the reactor (1), an electric current flows between the plates (7; 8) through the wastewater (2) present in the reservoir (3), whereby, as a result of electrolysis, a portion of the metal (M) of the plates (7; 8) is ionized and goes into solution in the form of metal ions (Mⁿ⁺, where n is the valency of the metal), hydroxyl ions (OH⁻) go into solution, and gas bubbles (inter alia H₂) appear on the surface of the plates (7; 8), which gas bubbles rise in the water (2), altogether such that the contaminants bind to the metal ions, the hydroxyl ions and/or the gas bubbles, whereby clusters form through coagulation, some of which clusters undergo electroflotation and move upwards, whereby they form floating flocs on the water's surface, and others form sediment through precipitation which sinks to the bottom of the reservoir (3);
adjusting means for the adjusting of the mutual distances between the adjacent plates (7; 8), and hence the adjusting of the intensity of the current flowing through the plate (7, 8) electrodes via the water (2); and
removal means for the removing of floating flocs and of the settled precipitate, or at least the facilitating thereof;
**characterized in that**
the plates (7, 8) are commonly arranged by means of hinges (19) so as to be pivotable about individual, mutually parallel pivot axes (15) that are determined by the hinges and extend in one flat plane and the plates (7, 8) are pivotable about the axes through the action of the pivot means ( 14, 15, 16, 17, 18, 19) while maintaining their mutually parallel relationship, such that the mutual distance between adjacent plates (7, 8) can be adjusted under the effect of a central unit (11) between a maximum distance, where the plates (7, 8) extend perpendicular to the flat plane (19) determined by the pivot axes (15), and a minimum distance determined by spacing means.

2. Reactor according to claim 1, **characterized in that** the pivot axes (15) extend through the mid regions of the plates (7, 8).

3. Reactor according to claim 1 or 2, **characterized in that** the pivot axes (15) extend vertically.

4. Reactor according to one of the preceding claims, **characterized in that** a stepper motor, forming part of the pivot means, is added to each plate (7, 8), which stepper motors are controlled such that all plates (7, 8) always assume the same pivot positions.

5. Reactor according to one of claims 1-3, **characterized in that** the pivot means ( 14, 15, 16, 17, 18, 19) comprise a common linear actuator (14).

6. Reactor according to Claim 5, **characterized in that** the actuator (14) is coupled with all plates (7, 8) via a straight coupling rod (16), parallel to the flat plane (19) determined by the hinge axes (15) in a force-transmitting and hingeable, electrically insulating manner via a pivot arm (17) that extends between the output shaft (18) of the actuator and the coupling rod (16) parallel thereto.

7. Reactor according to one of the preceding claims, **characterized in that** the pivot means ( 14, 15, 16, 17, 18, 19) are controllable by a central unit (11).

8. Reactor according to one of the preceding claims, **characterized in that** the central unit (11) comprises measurement means for the measuring of the intensity of the electric current flowing through the water (2) via the plates (7, 8) and for the adjusting of the pivot means ( 14, 15, 16, 17, 18, 19), and thereby the mutual distance between the plates (7, 8), on the basis of the chosen nominal current intensity entered into the measurement means such that the measured current intensity is automatically adjusted to the nominal current intensity.

9. Reactor according to one of the preceding claims, **characterized in that** the central unit (11) delivers direct current and all anode plates (7) consist of aluminium or iron and all cathode plates (8) consist of iron or aluminium, respectively.

10. Reactor according to one of the preceding claims, **characterized in that** the pivot means ( 14, 15, 16, 17, 18, 19) are configured such that the distances between adjacent plates (7, 8) are adjustable between about 2 mm and 20 mm.

11. Reactor according to one of the preceding claims, **characterized in that** the maximum distance between adjacent plates (7, 8) corresponds to a pivot position of the plates (7, 8) wherein all plates (7, 8) extend at an angle of 90° with respect to the plane determined by the pivot axes (15), and the minimum distance between adjacent plates (7, 8) corresponds to a pivot position of the plates (7, 8) wherein adjacent plates (7, 8) are kept out of electrically conductive contact with one another by spacing means.

12. Reactor according to claim 8, **characterized in that** the pivot position of the plates (7, 8) corresponding to the minimum distance is in the range of 60 - 75° with respect to the pivot position corresponding to the maximum distance.

13. Reactor according to claim 8 or 9, **characterized in that** the spacing means are electrically insulating mechanical means, for example a stop made of electrically insulating plastic.

14. Reactor according to claim 8 or 9, **characterized in that** the spacing means are implemented in software in the central unit (11).

15. Reactor according to one of the preceding claims, **characterized in that** the plates (7, 8) have a thickness in the range of 7 - 25 mm.

16. Reactor according to one of the preceding claims, **characterized in that** the reactor is designed as a flow-through system and the residence time of the water in the reservoir (3) is determined by timing means, into which the nominal value of the water flow rate through the reservoir (3) can be entered, where the residence time is equal to the quotient of the effective volume of the reservoir (3) and the water flow rate.

## Patentansprüche

1. Reaktor (1) zur Behandlung von Abwasser (2), das Schadstoffe, beispielsweise Schwermetalle, Chemikalien, Öle, Farbmittel, Pigmente, Textilfarbstoffe, Druckfarben, Bakterien, Viren, enthält, mit elektrolytischen Mitteln, wobei der Reaktor (1) Folgendes umfasst:
ein Abwasserreservoir (3), das wenigstens innenseitig elektrisch isolierend ist;
einen Einlass (4) für zu behandelndes Abwasser (2);
einen Auslass (5) für behandeltes Abwasser (6);
wobei das Abwasser sich während des Betriebs des Reaktors für eine gewählte Verweilzeit in dem Reservoir (3) befindet;
eine Anzahl abwechselnd ineinandergreifender, zueinander paralleler vertikaler Metallplatten (7; 8), die mit gleichen gegenseitigen Abständen zwischen einander angeordnet sind und als Elektroden fungieren, mit Verbindungsmitteln (9; 10) zum Verbinden der Platten (7; 8) mit einer elektrischen Stromquelle, sodass die Platten (7; 6) abwechselnd mit einem Anschluss und mit dem anderen Anschluss (12; 13) einer Zentraleinheit (11) verbunden sind,
sodass während des Betriebs des Reaktors (1) ein elektrischer Strom zwischen den Platten (7; 8) durch das in dem Reservoir (3) vorhandene Abwasser (2) fließt, wodurch infolge Elektrolyse ein Teil des Metalls (M) der Platten (7; 8) ionisiert wird und in Form von Metallionen (Mn+, wobei n die Wertigkeit des Metalls ist) in Lösung geht, Hydroxidionen (OH-) in Lösung gehen und Gasblasen (unter anderem H2) auf der Oberfläche der Platten (7; 8) erscheinen, wobei die Gasblasen in dem Wasser (2) aufsteigen, insgesamt so, dass die Schadstoffe sich an die Metallionen, die Hydroxidionen und/oder die Gasblasen anlagern, wodurch sich durch Koagulation Cluster bilden, von denen einige sich, bedingt durch Elektroflotation, nach oben bewegen, wodurch sie flotierende Flocken auf der Wasseroberfläche ausbilden, und andere durch Fällung ein Sediment ausbilden, das zum Boden des Reservoirs (3) sinkt;
Einstellmittel zum Einstellen der gegenseitigen Abstände zwischen den benachbarten Platten (7; 8) und folglich zum Einstellen der Stärke des Stroms, der über das Wasser (2) durch die als Platten (7, 8) vorliegenden Elektroden fließt; und
Entfernungsmittel zum Entfernen der flotierenden Flocken und des abgesetzten Niederschlags oder wenigstens zum Erleichtern dessen;
**dadurch gekennzeichnet, dass**
die Platten (7, 8) mittels Scharnieren (19) gemeinsam angeordnet sind, sodass sie um individuelle, zueinander parallele Schwenkachsen (15), die durch die Scharniere bestimmt werden und sich in einer flachen Ebene erstrecken, schwenkbar sind, und die Platten (7, 8) durch die Wirkung der Schwenkmittel (14, 15, 16, 17, 18, 19) um die Achsen schwenkbar sind, während ihre Parallelbeziehung zueinander aufrechterhalten wird, sodass der gegenseitige Abstand zwischen benachbarten Platten (7, 8) unter der Wirkung einer Zentraleinheit (11) zwischen einem maximalen Abstand, bei dem die Platten (7, 8) sich senkrecht zu der flachen Ebene (19), die durch die Schwenkachsen (15) bestimmt wird, erstrecken, und einem minimalen Abstand, der durch Beabstandungsmittel bestimmt wird, eingestellt werden kann.

2. Reaktor nach Anspruch 1, **dadurch gekennzeichnet, dass** die Schwenkachsen (15) sich durch die Mittelbereiche der Platten (7, 8) erstrecken.

3. Reaktor nach Anspruch 1 oder 2, **dadurch gekennzeichnet, dass** die Schwenkachsen (15) sich vertikal erstrecken.

4. Reaktor nach einem der vorangehenden Ansprüche, **dadurch gekennzeichnet, dass** jeder Platte (7, 8) ein Schrittmotor, der einen Teil der Schwenkmittel bildet, beigegeben ist, wobei die Schrittmotoren so gesteuert werden, dass alle Platten (7, 8) stets die gleichen Schwenkstellungen einnehmen.

5. Reaktor nach einem der Ansprüche 1 3, **dadurch gekennzeichnet, dass** die Schwenkmittel (14, 15, 16, 17, 18, 19) einen gemeinsamen Linearaktuator (14) umfassen.

6. Reaktor nach Anspruch 5, **dadurch gekennzeichnet, dass** der Aktuator (14) mit allen Platten (7, 8) gekoppelt ist, und zwar über eine gerade Kupplungsstange (16), parallel zu der flachen Ebene (19), die durch die Schwenkachsen (15) bestimmt wird, in einer kraftübertragenden und schwenkbaren, elektrisch isolierenden Weise über einen Schwenkarm (17), der sich zwischen der Abtriebswelle (18) des Aktuators und der dazu parallelen Kupplungsstange (16) erstreckt.

7. Reaktor nach einem der vorangehenden Ansprüche, **dadurch gekennzeichnet, dass** die Schwenkmittel (14, 15, 16, 17, 18, 19) durch eine Zentraleinheit (11) steuerbar sind.

8. Reaktor nach einem der vorangehenden Ansprüche, **dadurch gekennzeichnet, dass** die Zentraleinheit (11) Messmittel umfasst, zum Messen der Stärke des elektrischen Stroms, der über die Platten (7, 8) durch das Wasser (2) fließt, und zum Einstellen der Schwenkmittel (14, 15, 16, 17, 18, 19) und dadurch des gegenseitigen Abstands zwischen den Platten (7, 8) auf der Grundlage der gewählten Nennstromstärke, die in die Messmittel eingegeben wurde, sodass die gemessene Stromstärke automatisch auf die Nennstromstärke eingestellt wird.

9. Reaktor nach einem der vorangehenden Ansprüche, **dadurch gekennzeichnet, dass** die Zentraleinheit (11) Gleichstrom liefert und alle Anodenplatten (7) aus Aluminium oder Eisen bestehen und alle Kathodenplatten (8) entsprechend aus Eisen oder Aluminium bestehen.

10. Reaktor nach einem der vorangehenden Ansprüche, **dadurch gekennzeichnet, dass** die Schwenkmittel (14, 15, 16, 17, 18, 19) so ausgestaltet sind, dass die Abstände zwischen benachbarten Platten (7, 8) zwischen etwa 2 mm und 20 mm einstellbar sind.

11. Reaktor nach einem der vorangehenden Ansprüche, **dadurch gekennzeichnet, dass** der maximale Abstand zwischen benachbarten Platten (7, 8) einer Schwenkstellung der Platten (7, 8) entspricht, in der alle Platten (7, 8) sich in einem Winkel von 90°, bezogen auf die durch die Schwenkachsen (15) bestimmte Ebene, erstrecken, und der minimale Abstand zwischen benachbarten Platten (7, 8) einer Schwenkstellung der Platten (7, 8) entspricht, in der benachbarte Platten (7, 8) durch Beabstandungsmittel frei von elektrisch leitfähigem Kontakt miteinander gehalten werden.

12. Reaktor nach Anspruch 8, **dadurch gekennzeichnet, dass** die Schwenkstellung der Platten (7, 8), die dem minimalen Abstand entspricht, im Bereich von 60 - 75°, bezogen auf die Schwenkstellung, die dem maximalen Abstand entspricht, liegt.

13. Reaktor nach Anspruch 8 oder 9, **dadurch gekennzeichnet, dass** die Beabstandungsmittel elektrisch isolierende mechanische Mittel sind, beispielsweise ein aus elektrisch isolierendem Kunststoff hergestellter Anschlag.

14. Reaktor nach Anspruch 8 oder 9, **dadurch gekennzeichnet, dass** die Beabstandungsmittel in Software in der Zentraleinheit (11) implementiert sind.

15. Reaktor nach einem der vorangehenden Ansprüche, **dadurch gekennzeichnet, dass** die Platten (7, 8) eine Dicke im Bereich von 7 - 25 mm aufweisen.

16. Reaktor nach einem der vorangehenden Ansprüche, **dadurch gekennzeichnet, dass** der Reaktor als Durchflusssystem konzipiert ist und die Verweilzeit des Wassers in dem Reservoir (3) durch Zeitplanungsmittel bestimmt wird, in die der Nennwert der Wasserdurchflussmenge durch das Reservoir (3) eingegeben werden kann, wobei die Verweilzeit gleich dem Quotienten aus dem effektiven Volumen des Reservoirs (3) und der Wasserdurchflussmenge ist.

## Revendications

1. Réacteur (1) pour le traitement d'eaux usées (2) qui contiennent des contaminants, par exemple des métaux lourds, des produits chimiques, des huiles, des colorants, des pigments, des colorants pour textiles, des encres, des bactéries, des virus, par des moyens électrolytiques, lequel réacteur (1) comprend :
un réservoir d'eaux usées (3), dont l'intérieur au moins est électriquement isolant ;
une admission (4) pour les eaux usées (2) à traiter ;
une évacuation (5) pour les eaux usées traitées (6) ;
dans lequel les eaux usées se trouvent dans le réservoir (3) pendant un temps de séjour choisi pendant le fonctionnement du réacteur ;
un certain nombre de plaques métalliques verticales parallèles les unes aux autres et imbriquées en alternance (7 ; 8) positionnées avec les mêmes distances réciproques entre elles faisant office d'électrodes dotées de moyens de connexion (9 ; 10) pour la connexion des plaques (7 ; 8) à une source de courant électrique, de telle sorte que les plaques (7 ; 6) soient alternativement connectées avec une connexion et avec l'autre connexion (12 ; 13) d'une unité centrale (11), de telle sorte que, pendant le fonctionnement du réacteur (1), un courant électrique circule entre les plaques (7 ; 8) à travers les eaux usées (2) présentes dans le réservoir (3), moyennant quoi, en résultat à une électrolyse, une partie du métal (M) des plaques (7 ; 8) est ionisée et passe en solution sous forme d'ions métalliques (Mn+, où n est la valence du métal), les ions hydroxyle (OH-) passent en solution, et des bulles de gaz (entre autres, H2) apparaissent à la surface des plaques (7 ; 8), lesquelles bulles de gaz montent dans l'eau (2), complètement de telle sorte que les contaminants se lient aux ions métalliques, aux ions hydroxyle et/ou aux bulles de gaz, moyennant quoi des amas se forment par coagulation, certains desdits amas subissent une électroflottation et se déplacent vers le haut, moyennant quoi ils forment des flocs flottants à la surface de l'eau, et d'autres forment des sédiments par précipitation qui coulent au fond du réservoir (3) ;
des moyens de réglage pour le réglage des distances réciproques entre les plaques adjacentes (7 ; 8), et par conséquent le réglage de l'intensité du courant circulant à travers les électrodes des plaques (7 ; 8) par le biais de l'eau (2) ; et
des moyens d'élimination pour l'élimination de flocs flottants et du précipité déposé, ou au moins pour faciliter celle-ci ;
**caractérisé en ce que**
les plaques (7, 8) sont couramment agencées au moyen de charnières (19) de manière à pouvoir pivoter autour d'axes de pivot individuels parallèles entre eux (15) qui sont déterminés par les charnières et s'étendent dans un plan plat et les plaques (7, 8) peuvent pivoter autour des axes par l'action des moyens de pivot (14, 15, 16, 17, 18, 19) tout en maintenant leur relation réciproquement parallèle, de telle sorte que la distance réciproque entre des plaques adjacentes (7, 8) puisse être réglée sous l'effet d'une unité centrale (11) entre une distance maximale, où les plaques (7, 8) s'étendent perpendiculairement au plan plat (19) déterminé par les axes de pivot (15), et une distance minimale déterminée par des moyens d'espacement.

2. Réacteur selon la revendication 1, **caractérisé en ce que** les axes de pivot (15) s'étendent à travers les régions médianes des plaques (7, 8).

3. Réacteur selon la revendication 1 ou 2, **caractérisé en ce que** les axes de pivot (15) s'étendent verticalement.

4. Réacteur selon l'une des revendications précédentes, **caractérisé en ce qu'**un moteur pas à pas, faisant partie des moyens de pivot, est ajouté à chaque plaque (7, 8), lesquels moteurs pas à pas sont commandés de telle sorte que toutes les plaques (7, 8) adoptent toujours les mêmes positions de pivot.

5. Réacteur selon l'une des revendications 1 à 3, **caractérisé en ce que** les moyens de pivot (14, 15, 16, 17, 18, 19) comprennent un actionneur linéaire commun (14).

6. Réacteur selon la revendication 5, **caractérisé en ce que** l'actionneur (14) est accouplé à toutes les plaques (7, 8) par le biais d'une tige d'accouplement rectiligne (16), parallèle au plan plat (19) déterminé par les axes (15) de charnière d'une manière électro-isolante à transmission de force et articulable par le biais d'un bras pivotant (17) qui s'étend entre l'arbre de sortie (18) de l'actionneur et la tige d'accouplement (16) parallèle à celui-ci.

7. Réacteur selon l'une des revendications précédentes, **caractérisé en ce que** les moyens de pivot (14, 15, 16, 17, 18, 19) peuvent être commandés par une unité centrale (11).

8. Réacteur selon l'une des revendications précédentes, **caractérisé en ce que** l'unité centrale (11) comprend des moyens de mesure pour mesurer l'intensité du courant électrique circulant dans l'eau (2) par l'intermédiaire des plaques (7, 8) et pour régler les moyens de pivot (14, 15, 16, 17, 18, 19), et de ce fait la distance réciproque entre les plaques (7, 8), sur la base de l'intensité de courant nominal choisie saisie dans les moyens de mesure de telle sorte que l'intensité de courant mesurée soit automatiquement réglée sur l'intensité de courant nominale.

9. Réacteur selon l'une des revendications précédentes, **caractérisé en ce que** l'unité centrale (11) délivre un courant continu et toutes les plaques anodiques (7) sont constituées d'aluminium ou de fer et toutes les plaques cathodiques (8) sont constituées de fer ou d'aluminium, respectivement.

10. Réacteur selon l'une des revendications précédentes, **caractérisé en ce que** les moyens de pivot (14, 15, 16, 17, 18, 19) sont conçus de telle sorte que les distances entre des plaques adjacentes (7, 8) soient réglables entre environ 2 mm et 20 mm.

11. Réacteur selon l'une des revendications précédentes, **caractérisé en ce que** la distance maximale entre des plaques adjacentes (7, 8) correspond à une position de pivot des plaques (7, 8) dans laquelle toutes les plaques (7, 8) s'étendent selon un angle de 90° par rapport au plan déterminé par les axes de pivot (15), et la distance minimum entre des plaques adjacentes (7, 8) correspond à une position de pivot des plaques (7, 8) dans laquelle des plaques adjacentes (7, 8) sont maintenues hors de tout contact électroconducteur les unes avec les autres par des moyens d'espacement.

12. Réacteur selon la revendication 8, **caractérisé en ce que** la position de pivot des plaques (7, 8) correspondant à la distance minimale est dans la plage de 60 à 75° par rapport à la position de pivot correspondant à la distance maximale.

13. Réacteur selon la revendication 8 ou 9, **caractérisé en ce que** les moyens d'espacement sont des moyens mécaniques électro-isolants, par exemple une butée en plastique électro-isolant.

14. Réacteur selon la revendication 8 ou 9, **caractérisé en ce que** les moyens d'espacement sont mis en oeuvre dans un logiciel dans l'unité centrale (11).

15. Réacteur selon l'une des revendications précédentes, **caractérisé en ce que** les plaques (7, 8) ont une épaisseur dans la plage de 7 à 25 mm.

16. Réacteur selon l'une des revendications précédentes, **caractérisé en ce que** le réacteur est conçu comme un système à écoulement continu et le temps de séjour de l'eau dans le réservoir (3) est déterminé par des moyens de chronométrage, dans lesquels peut être saisie la valeur nominale du débit d'eau à travers le réservoir (3), le temps de séjour étant égal au quotient du volume efficace du réservoir (3) et du débit d'eau.
